# EUROPÄISCHE PATENTSCHRIFT

(11) **EP 1 389 881 B1**
(45) Veröffentlichungstag und Bekanntmachung des Hinweises auf die Patenterteilung: **21.06.2006**
(21) Anmeldenummer: 03090202.7
(22) Anmeldetag: 08.07.2003
(51) Int. Cl.: H04Q 7/22, G08G 1/123, G01S 5/14

(54) **Verfahren zum Ubertragen von ein bewegliches Objekt betreffenden Standorten**
Method to transmit positions relating to a mobile object
Méthode de transmission de locations d'un objet mobile

(30) Priorität: 13.08.2002 DE 10237563
(43) Veröffentlichungstag der Anmeldung: 18.02.2004
(73) Patentinhaber: SIEMENS AKTIENGESELLSCHAFT, 80333 München (DE)
(72) Erfinder: Berg, Andreas, 13591 Berlin (DE); Moneke, Klaus, 14089 Berlin (DE)

(56) Entgegenhaltungen:
- EP-A- 1 085 775
- WO-A-01/13662
- WO-A-95/03665

## Beschreibung

Die Erfindung betrifft ein Verfahren zum Übertragen von ein bewegliches Objekt betreffenden Standortdaten, bei dem die Standortdaten mittels eines Mobilkommunikationsnetzes zu einem Empfangsrechner übertragen werden, in welchem eine Datenauswertung durchführbar ist.

Ein derartiges Verfahren ist aus der Firmenschrift "Cargo aktuell - Das Kundenmagazin für Transport und Logistik", Nr. 1 vom Februar 2001, herausgegeben von der DB Cargo AG aus Seite 10, Artikel "Transportüberwachung aus dem All" bekannt. Bei diesem bekannten Verfahren werden Güterwagen eines Zuges mit GPS-Geräten (GPS = Global Positioning System) ausgerüstet, welche unter Nutzung des bekannten Satellitennavigationssystems GPS Standortdaten der betreffenden Wagen ermitteln. Diese Standortdaten werden daraufhin in einem GSM-Mobilfunknetz (GSM = Global System for Mobile Communications) in Form einer SMS-Nachricht (SMS = Short Massage Service) an einen Empfangsrechner übertragen, der die übersandten Daten auswertet.

Aus der deutschen Offenlegungsschrift DE 100 18 999 A1 ist ein Verfahren zur Bereitstellung von Ortsinformationen bekannt, bei dem von einer Dienstezentrale eines Intelligenten Netzes eine USSD-Nachricht zu demjenigen Besucherregister VLR/MSC weitergeleitet wird, bei dem ein Mobilfunkteilnehmer seinen letzten Kontakt mit dem Netz hatte. Das Netz versucht daraufhin, die USSD-Nachricht zu dem Mobilfunkteilnehmer weiterzuleiten; es führt ein Paging aus. Bei erfolgreicher Ermittlung des Aufenthaltsortes wird dann eine Ortsinformation in dem Besucherregister aktualisiert.

Aus der Patentschrift DE 697 14 232 T2 ist ein Verfahren betreffend eine Fernabfrage von SIM-Daten über eine nichtanrufbezogene Verbindung bekannt, bei dem ein netzexterner USSD-Knotenanwender eine für eine Mobilstation bestimmte USSD-Meldung zu einem Heimatregister eines Mobilkommunikationsnetzes überträgt. Das Heimatregister ermittelt daraufhin die momentane Position der Mobilstation und die USSD-Meldung wird zu der Mobilstation übertragen.

Weiterhin ist aus der deutschen Offenlegungsschrift DE 196 51 110 A1 ein Verfahren zur USSD-Positionierung bekannt, bei dem eine ortsabhängige Dienstanwendung, die in einem mobilen öffentlichen Heimatnetzwerk HPLMN oder in einem besuchten öffentlichen mobilen Landnetzwerk VPLMN abläuft, eine USSD-Anforderung für eine Übertragung einer Ortsinformation absendet.

Aus der internationalen Patentanmeldung WO 95/03665 A1 ist ein Verfahren bekannt, mit dem eine aktuelle Ortsposition eines beweglichen Objekts in Form eines Fahrzeuges ermittelt werden kann. Bei diesem Verfahren wird von einem an dem Fahrzeug angebrachten Sender eine Datennachricht, die eine Ortsinformation über den aktuellen Standort des Fahrzeugs enthält, über ein Mobilfunknetz zu einer Vermittlungsstelle übertragen. Von dieser Vermittlungsstelle wird die Datennachricht an eine Plattform weitergeleitet, bei der die Datennachricht gespeichert wird. Von einem mit der Plattform verbundenen Host kann auf die Datennachricht zugegriffen werden.

Der Erfindung liegt die Aufgabe zugrunde, ein besonders zuverlässiges und kostengünstig arbeitendes Verfahren zum Übertragen von ein bewegliches Objekt betreffenden Standortdaten anzugeben.

Diese Aufgabe wird erfindungsgemäß gelöst durch ein Verfahren zum Übertragen von ein bewegliches Objekt betreffenden Standortdaten, bei dem mit dem Objekt ein mobiles Kommunikationsendgerät verbunden ist, jedoch bei dem Objekt keine Standortbestimmungseinrichtung vorhanden ist, wobei bei dem Verfahren von dem mit dem Objekt verbundenen mobilen Kommunikationsendgerät ein standortdatenfreier USSD-String zu einem Mobilkommunikationsnetz übertragen wird, daraufhin in dem Mobilkommunikationsnetz mittels einer Basisstation netzintern Standortdaten des mobilen Kommunikationsendgerätes (KEG) ermittelt werden, diese Standortdaten zu einem Steuerknoten übertragen werden, und von dem Steuerknoten des Mobilkommunikationsnetzes die Standortdaten an einen Empfangsrechner übertragen werden, in welchem eine Datenauswertung durchführbar ist.

Dabei ist in Mobilkommunikationsnetzen für den Absender eines USSD-Strings aufgrund der sofortigen Reaktion ("Handshaking") des Empfängers unmittelbar ersichtlich, dass der USSD-String sein beabsichtigtes Ziel erreicht hat.

Bei dem erfindungsgemäßen Verfahren werden in dem Mobilkommunikationsnetz netzintern ermittelte Standortdaten des mobilen Kommunikationsendgerätes zu dem Steuerknoten übertragen. Dabei ist insbesondere vorteilhaft, dass die netzintern ermittelten Standortdaten mittels bereits in Mobilfunknetzen vorhandenen Netzinfrastrukturen und Netzeinrichtungen ermittelt werden können. Derartige Einrichtungen zur Ermittlung des Standortes eines Mobilkommunikationsendgerätes sind in Mobilkommunikationsnetzen im Regelfall vorhanden. Daher braucht bei dem erfindungsgemäßen Verfahren an dem beweglichen Objekt keine eigene Standortsbestimmungseinrichtung vorhanden zu sein, wodurch sich das Verfahren besonders kostengünstig realisieren läßt.

Bei dem eben behandelten Verfahren kann erfindungsgemäß als netzintern ermittelte Standortdaten eine Kennung eines für das mobile Kommunikationsendgerät zuständigen Besucherregisters übertragen werden. Erfindungsgemäß wird die Kennung des jeweiligen Besucherregisters als eine Standortinformation bzw. als Standortdaten des jeweiligen Kommunikationsendgerätes genutzt; dies ist möglich, da jedes Besucherregister (VLR = Visitor Location Register) für Mobil-Kommunikationsendgeräte einer bestimmten geografischen Region zuständig ist.

Als netzintern ermittelte Standortdaten kann auch ein Kennzeichen ("Location Area") des Gebietes übertragen werden, indem sich das mobile Kommunikationsendgerät befindet.

Ebenso können als netzintern ermittelte Standortdaten erfindungsgemäß ein Identifikationszeichen der Mobilfunkzelle übertragen werden, in der sich das mobile Kommunikationsendgerät befindet.

Das erfindungsgemäße Verfahren kann so ablaufen, dass als Steuerknoten ein Dienstesteuerungspunkt eines eine Struktur eines Intelligenten Netzes (IN) aufweisenden Mobilkommunikationsnetzes verwendet wird. Mit Hilfe des Dienstesteuerungspunktes eines Intelligenten Netzes können die Verfahrensschritte im Mobilkommunikationsnetz bei sehr geringem Entwicklungs- und Einrichtungsaufwand einfach und kostengünstig durchgeführt bzw. gesteuert werden.

Erfindungsgemäß kann der Empfangsrechner als Teil des Dienstesteuerungspunktes ausgebildet sein. Bei dieser Ausgestaltungsform ist die Datenauswertung innerhalb des Intelligenten Netzes durchführbar, so dass auf zusätzliche Hardware, welche beispielsweise an das Intelligente Netz angeschlossen werden müßte, verzichtet werden kann.

Bei dem erfindungsgemäßen Verfahren können die Standortdaten zu vorausbestimmten Zeitpunkten zu dem Empfangsrechner übertragen werden.

Die beweglichen Objekte können einem Transportfahrzeug zugeordnet sein. Bei einem derartigen Objekt kann es sich beispielsweise um einen Transportcontainer handeln, welcher mittels eines Zug-Wagons oder mittels eines Transportkraftfahrzeuges (LKW) transportiert wird. Ebenso kann es sich natürlich bei dem beweglichen Objekt um einen beliebigen beweglichen Gegenstand handeln, dessen aktuelle Position von Interesse ist.

In den Figuren 1 bis 3 und 5 sind denkbare Ausführungsbeispiele von Verfahren und der dabei auftretenden Nachrichtenflüsse dargestellt. Es ist in
Figur 1 ein erstes Ausführungsbeispiel eines Verfahrens mit einer satellitengestützten Standortdatenermittlung, in
Figur 2 ein zweites Ausführungsbeispiel eines Verfahrens mit einer satellitengestützten Standortdatenermittlung, in
Figur 3 ein drittes Ausführungsbeispiel eines Verfahrens mit einer satellitengestützten Standortdatenermittlung, sowie in
Figur 5 ein Ausführungsbeispiel einer bei den Verfahren verwendeten Datennachricht dargestellt.

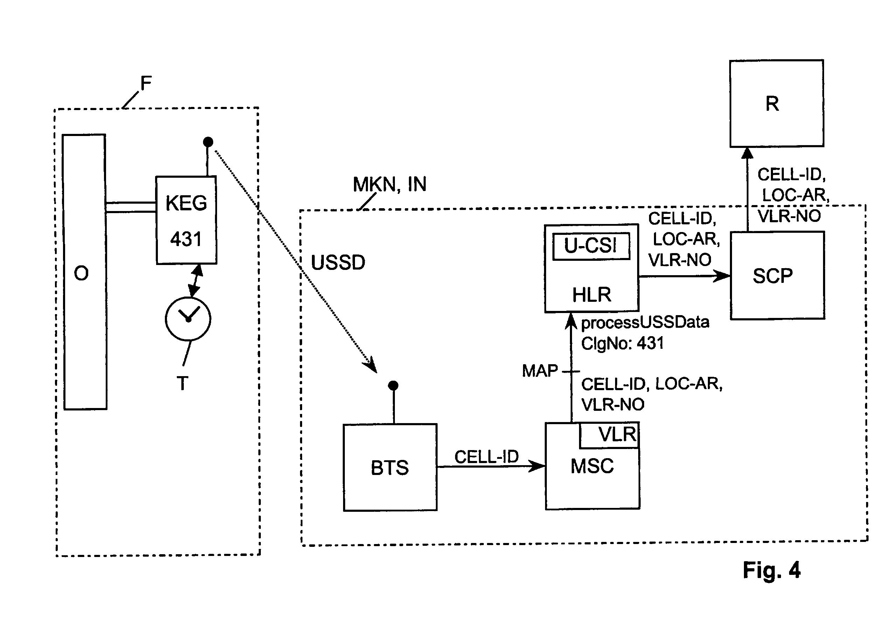

Die Erfindung wird dahingegen weiter erläutert mittels Figur 4; es ist in
Figur 4 ein Ausführungsbeispiel eines Verfahrens mit einer netzinternen Ermittlung der Standortdaten dargestellt.

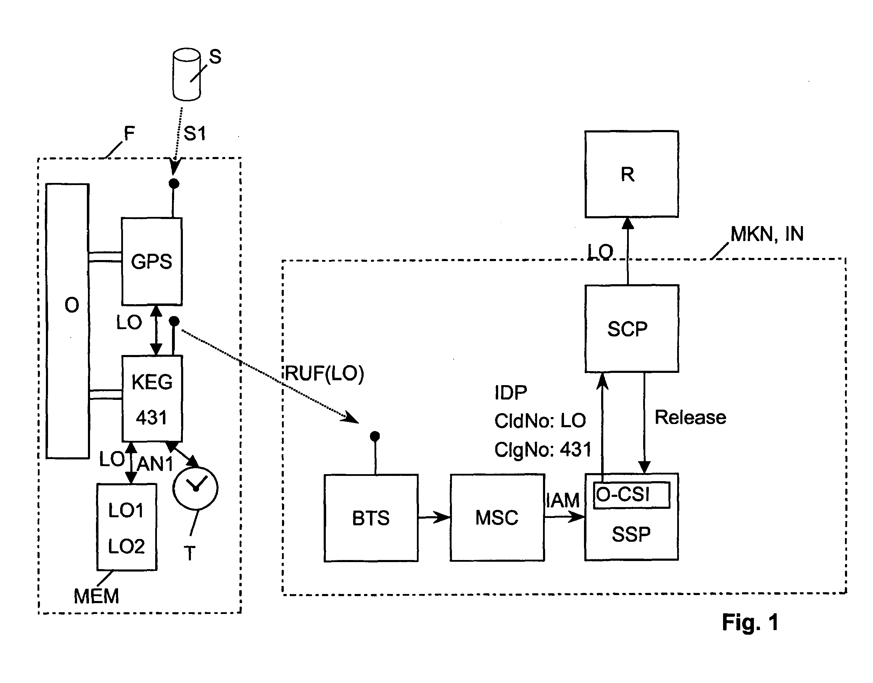

Denkbar ist das in Figur 1 dargestellte Verfahren:
In Figur 1 ist auf der linken Seite schematisch ein bewegliches Objekt O dargestellt, welches sich an Bord eines Transportfahrzeuges F (z. B. eines Zugwagons oder eines LKWs) befindet. Das bewegliche Objekt O ist mit einem Satellitenempfänger GPS und einem Kommunikationsendgerät KEG (z.B. einem Mobilfunk-Modul, welches nach dem GSM-, dem GPRS- oder dem UMTS-Standard arbeitet) verbunden. Dem Kommunikationsendgerät KEG ist in diesem Ausführungsbeispiel eine Mobilfunk-Rufnummer "431" zugeordnet. Der Satellitenempfänger und das Kommunikationsendgerät können beispielsweise mechanisch mit dem beweglichen Objekt O verbunden sein (die Verbindung ist symbolisiert durch zwei parallele Striche); der Satellitenempfänger GPS und/oder das Kommunikationsendgerät KEG können aber auch in dem Fahrzeug F installiert sein und auf diese Weise temporär mit dem beweglichen Objekt verbunden sein. Der Satellitenempfänger GPS empfängt ein Satellitensignal S1 von einem Satelliten S sowie weitere (nicht dargestellte) Satellitensignale von nicht dargestellten weiteren Satelliten, und berechnet daraus in bekannter Weise Standortdaten (Ortsdaten, Positionsdaten) des Satellitenempfängers GPS, die damit auch Standortdaten des Objektes O darstellen. Diese Standortdaten LO werden an das Kommunikationsendgerät KEG weitergeleitet und von diesem unter Nutzung dessen Funkschnittstelle an ein auf der rechten Seite der Figur 1 schematisch dargestelltes Mobilkommunikationsnetz MKN übertragen. Bei diesem Mobilkommunikationsnetz MKN kann es sich z. B. um ein Mobilfunknetz nach dem GSM-, GPRS- oder UMTS-Standard handeln. Die Ermittlung der Standortdaten LO und die Übertragung der Standortdaten an das Mobilkommunikationsnetz kann zeitgesteuert zu vorbestimmten Zeitpunkten oder innerhalb vorbestimmter Zeitintervalle erfolgen. Zu diesem Zweck ist das Kommunikationsendgerät KEG mit einer Zeitsteuerstufe T verbunden. In einer weiteren Variante erfolgt die Ermittlung der Standortdaten und deren Übertragung an das Mobilfunknetz dann, wenn das sich bewegende Objekt O einen vorausbestimmten Ort erreicht. Zu diesem Zweck ist das Kommunikationsendgerät KEG mit einer Speicher-Vergleicher-Einheit MEM ausgestattet. In dieser Speicher-Vergleicher-Einheit MEM sind zu den vorausbestimmten Orten korrespondierende vorausbestimmte Standortdaten LO1, LO2 usw. abgespeichert. Die in dieser Ausführungsform von dem Satellitenempfänger periodisch ermittelten Standortdaten LO werden in der Speicher-Vergleicher-Einheit MEM mit den vorausbestimmten Standortdaten LO1, LO2 usw. verglichen. Sobald die aktuell ermittelten Standortdaten LO mit den vorausbestimmten Standortdaten LO1, LO2 übereinstimmen (bzw. die Differenz zwischen den aktuellen Standortdaten LO und den vorausbestimmten, gespeicherten Standortdaten LO1, LO2 eine festgelegte Schwelle unterschreitet) gibt die Speicher-Vergleicher-Einheit MEM ein Anregungssignal AN1 an das Kommunikationsendgerät KEG ab, woraufhin dieses die aktuell ermittelten Standortdaten LO an das Mobilkommunikationsnetz MKN übermittelt.

Diese Übermittlung der Standortdaten LO wird im folgenden beschrieben. Das Kommunikationsendgerät KEG baut zur Übermittlung der Standortdaten einen Teil-Mobilkommunikationsruf RUF zu einem Steuerknoten SCP (SCP = Service Switching Point, Dienstesteuerungspunkt) des Mobilfunknetzes MKN auf. Das Mobilkommunikationsnetz MKN weist in diesem Ausführungsbeispiel eine Struktur eines Intelligenten Netzes (IN) auf. Elemente dieser IN-Netzstruktur sind u.a. der bereits erwähnte Dienstesteuerpunkt SCP und ein Dienstevermittlungspunkt SSP (SSP = Service Switching Point). Weiterhin weist das Mobilkommunikationsnetz MKN eine Vermittlungsstelle MSC (MSC = Mobile Switching Center) und eine Basisstation BTS (BTS = Base Transceiver Station) auf. Der Teil-Mobilkommunikationsruf RUF, mit dem die Standortdaten LO zu dem Kommunikationsnetz übertragen werden, wird wie ein gewöhnlicher Mobilkommunikationsruf in bekannter Weise über die Luftschnittstelle, die Basisstation BTS und die Vermittlungsstelle MSC zu dem Dienstevermittlungspunkt SSP geleitet; die Standortdaten LO werden also bei der Basisstation BTS von dem Mobil-Kommunikationsnetz erfasst. Über die Luftschnittstelle werden die Standortdaten beispielsweise mittels der Nachricht "setup" beim Verbindungsaufbau übermittelt; die Standortdaten können dabei mittels des Datenfeldes übertragen werden, dass für die Übertragung der Zielrufnummer eines mobilkommunikationsnetzexternen Zielteilnehmers vorgesehen ist. Für die Übertragung der Rufdaten von der Vermittlungsstelle MSC zum Dienstevermittlungspunkt SSP wird in diesem Ausführungsbeispiel die Nachricht "Initial Address Message" (IAM) verwendet. Der Dienstevermittlungspunkt SSP erkennt mittels eines bekannten O-CSI-Triggers (O-CSI = Originating Camel Subscription Information), dass ein von dem Kommunikationsendgerät KEG ausgehender Teil-Mobilkommunikationsruf RUF eingetroffen ist und sendet daraufhin eine Nachricht "Initial Detection Point" (IDP) an den Dienstesteuerungspunkt SCP. In dieser Nachricht IDP ist als Absenderinformation (ClgNo = Calling Number) die Mobilfunkrufnummer 431 des Kommunikationsendgerätes KEG enthalten. Da der Teil-Mobilkommunikationsruf an den Steuerknoten SCP (also eine mobilfunknetzinterne Einheit) gesendet wurde, und nicht an einen "normalen", über eine Ziel-Mobilfunkrufnummer adressierbaren B-Teilnehmer, ist das Datenfeld für die Zielrufnummer (CldNo = Called Number) in der Nachricht IP unbenutzt und wird mit den (mit dem Teil-Mobilkommunikationsruf RUF übertragenen) Standortdaten LO belegt. Der Dienstesteuerungspunkt SCP empfängt die Nachricht IDP, ermittelt aus dieser Nachricht die Standortdaten LO und die Absender-Rufnummer 431 und leitet sowohl die Standortdaten als auch die Absender-Rufnummer an einen Empfangsrechner R weiter, welcher extern an das Mobilkommunikationsnetz MKN angeschlossen ist. Aufgrund der Standortdaten LO und der Rufnummer 431 ist nun bei dem Empfangsrechner R die Information vorhanden, an welchem Standort sich das Objekt O, das mit dem Mobilkommunikationsendgerät KEG verbunden ist, aktuell befindet.

Nachdem der Dienstesteuerungspunkt SCP die Nachricht IDP entgegengenommen hat, also den Teil-Mobilkommunikationsruf RUF erkannt hat, bricht er diesen Teil-Kommunikationsruf RUF ab, indem er eine Nachricht "Release" an den Dienstevermittlungspunkt SSP sendet. Der Teil-Mobilkommunikationsruf wird also innerhalb des Mobilkommunikationsnetzes MKN abgebrochen und dadurch beendet; dadurch unterscheidet er sich von einem normalen Mobil-Kommunikationsruf, der zu einem mobilkommunikationsnetzexternen Zielteilnehmer weitergeleitet wird. Es wird also bei diesem Teil-Mobilkommunikationsruf RUF nur ein sog. "A-Leg" von dem rufenden Teilnehmer KEG zu dem Mobilfunknetz hergestellt, jedoch kein sog. "B-Leg" von dem Mobilkommunikationsnetz zu einem gerufenen Teilnehmer. Derartige Teil-Mobilkommunikationsrufe werden auch als "Call Attempt" bezeichnet. Durch diese kurzen "Call Attempts" wird das Mobilkommunikationsnetz nur geringfügig belastet.

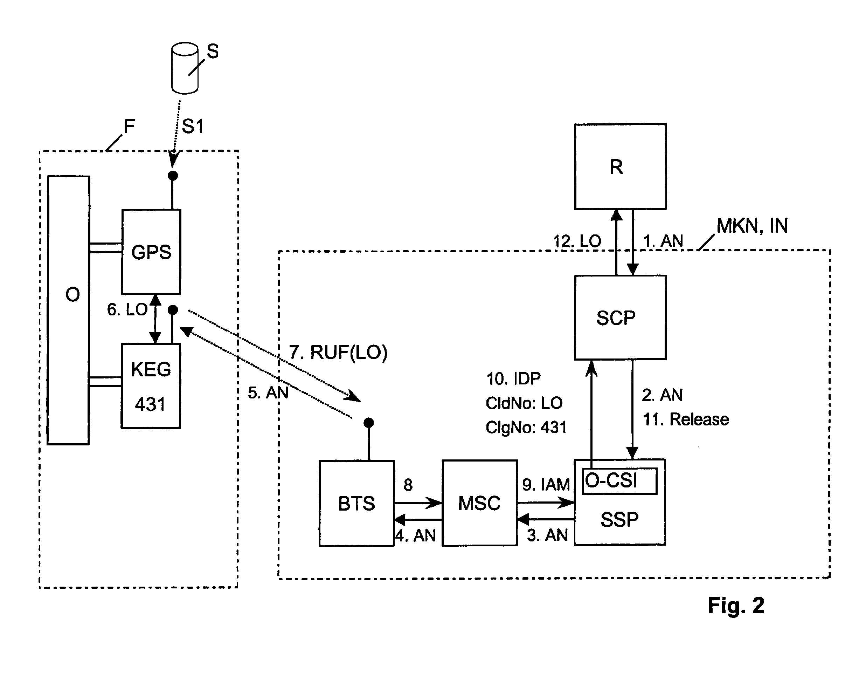

Denkbar ist auch das in Figur 2 dargestellte Verfahren:
In Figur 2 ist ein Verfahrensablauf dargestellt, der sich von dem im Zusammenhang mit Figur 1 erläuterten Verfahrensablauf dadurch unterscheidet, dass von Seiten des Empfangsrechners R festgelegt wird, zu welchem Zeitpunkt Standortdaten LO des mobilen Objektes ermittelt und über das Mobilkommunikationsnetz MKN zu diesem Empfangsrechner R übermittelt werden. Aus diesem Grunde ist auf Seiten des Kommunikationsendgerätes KEG die in Fig. 1 dargestellte Speicher-Vergleicher-Einheit MEM und die Zeitsteuerstufe T nicht notwendig.

Wenn auf Seiten des Empfangsrechners R Bedarf nach Standortdaten des Objektes O besteht, dann sendet der Empfangsrechner R eine Anregungsnachricht AN über den Dienstesteuerungspunkt SCP, den Dienstevermittlungspunkt SSP, die Vermittlungsstelle MSC und die Basisstation BTS an das Kommunikationsendgerät KEG. Aufgrund dieser Anregungsnachricht fragt das Kommunikationsendgerät KEG von den Satellitenempfänger GPS die aktuellen Standortdaten LO ab und sendet diese mittels des Teil-Mobilkommunikationsrufes RUF an die Basisstation eBTS des Mobilkommunikationsnetzes MKN. Der weitere Ablauf entspricht dem im Zusammenhang mit der Figur 1 erläuterten Verfahrensablauf.

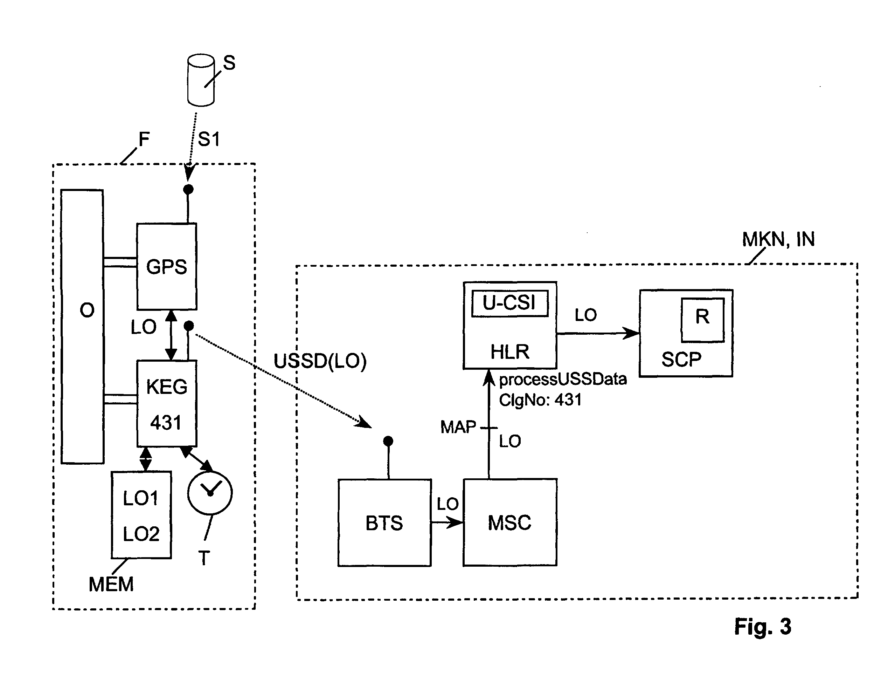

In Figur 3 ist ein weiterer denkbarer Verfahrensablauf beispielhaft dargestellt, bei dem die aktuellen Standortdaten LO des beweglichen Objektes O zeitgesteuert (Zeitgeber T) oder ortsgesteuert (Speicher-Vergleicher-Einheit MEM) mittels eines USSD-Strings USSD zu der Basisstation BTS des MobilKommunikationsnetzes MKN übertragen werden. Mit Hilfe der Nachricht USSD werden die Positionsdaten LO als Signalisierungsinformationen zu dem Mobilfunknetz übertragen, wo sie von der Basisstation BTS des MobilKommunikationsnetzes erfasst werden. Da Signalisierungsinformationen in Form eines USSD-Strings mit geringem Aufwand zu dem Mobilfunknetz übertragen werden können, ermöglicht diese spezielle Art der Datenübertragung ein besonders kostengünstiges Verfahren zum Übertragen der Standortdaten. Die mit Hilfe des USSD-Strings USSD übertragenen Informationen (darunter die Standortdaten LO) werden von der Basisstation BTS in bekannter Weise zu der Mobilfunkvermittlungsstelle MSC übertragen, welche diese Daten mittels einer MAP-Nachricht "ProcessUSSData" zu einem im Kommunikationsnetz vorhandenen, dem Kommunikationsendgerät KEG zugeordneten Heimatregister HLR überträgt. Diese Datenübertragung wird mittels eines bekannten "U-CSI-Triggers" U-CSI gesteuert (U-CSI = USSD-Camel Subscription Information). Das Heimatregister HLR sendet die Standortdaten daraufhin an den Dienstesteuerungspunkt SCP weiter. In diesem Beispiel enthalten die Standortdaten LO auch das bewegliche Objekt O kennzeichnende Informationen, so dass allein aufgrund der Standortdaten beim SCP die Information vorliegt, an welcher geografischen Position sich das Fahrzeug F mit dem beweglichen Objekt O aktuell befindet.

In diesem Ausführungsbeispiel ist der Empfangsrechner R als Teil des Dienstesteuerungspunktes SCP ausgebildet. Dies hat den Vorteil, dass für die eigentliche Datenauswertung keine zusätzliche Hardware in Form eines externen Empfangsrechners R (wie bei den im Zusammenhang mit den Figuren 1 und 2 beschriebenen Verfahren) notwendig ist, sondern der im Intelligenten Netz sowieso vorhandene Dienstesteuerungspunkt SCP auch gleichzeitig die Datenauswertung durchführen kann. Diese Ausgestaltung des Empfangsrechners R sorgt dafür, dass das Verfahren mit lediglich geringen Investitionskosten durchführbar ist. Auch bei den Verfahren, wie sie im Zusammenhang mit der Figur 1, 2 oder 4 beschrieben sind, kann der Empfangsrechner R als Teil des Dienstesteuerungspunkt SCP ausgebildet sein.

In Figur 4 ist ein Ausführungsbeispiel des erfindungsgemäßen Verfahrens dargestellt, bei dem in dem Mobil-Kommunikationsnetz MKN netzintern Standortdaten ermittelt, zu dem Dienstesteuerungspunkt SCP und von diesem zu dem Empfangsrechner R übertragen werden. Bei dem mobilen Objekt O ist lediglich das Kommunikationsendgerät KEG und die Zeitsteuerstufe T vorhanden. Zu von der Zeitsteuerstufe T vorgegebenen Zeitpunkten sendet das Kommunikationsendgerät KEG einen USSD-String USSD an die Basisstation BTS des Mobil-Kommunikationsnetzes. Die Basisstation BTS ermittelt in bekannter Weise die Mobilfunkzelle, in der sich das Kommunikationsendgerät KEG aktuell befindet, und leitet ein Identifikationszeichen dieser Mobilfunkzelle (eine sog. "Cell-ID") als erste Standortdaten an die Vermittlungsstelle MSC weiter. Der Vermittlungsstelle MSC ist ein Besucherregister VLR zugeordnet, das für die Basisstationen eines bestimmten geografischen Bereiches zuständig ist. Eine Kennung (die VLR-Nummer VLR-NO) dieses Besucherregisters wird als ein zweites Standortdatum verwendet. In diesem Ausführungsbeispiel wird zusätzlich ein Kennzeichen ("Location Area") des geografischen Gebietes, indem sich das mobile Kommunikationsendgerät KEG aktuell befindet, als ein weiteres, drittes Standortdatum verwendet. Die Vermittlungsstelle MSC sendet nun gemeinsam mit der Nachricht "ProcessUSSData" Standortdaten in Form des Identifikationszeichens CEll-ID der Mobilfunkzelle, der Kennung VLR-NO des Besucherregisters VLR und des Kennzeichens LOC-AR des geografischen Gebietes des Kommunikationsendgerätes an das Heimatregister HLR. Von diesem Heimatregister HLR werden die Standortdaten CELL-ID, LOC-AR, VLR-NO zu den Dienstesteuerungspunkt SCP und von diesem zu dem Empfangsrechner R übertragen. Die Verwendung des Identifikationszeichens CELL-ID, des Kennzeichens LOC-AR und der Kennung VLR-NO als Standortdaten für das bewegliche Objekt O ist vorteilhaft, da diese Größen in einem Mobil-Kommunikationsnetz einfach bestimmt werden können. Durch eine Benutzung dieser Größen für einen neuen, Mobilkommunikationsnetz-fremden Zweck, nämlich zur Standortbestimmung eines beweglichen Gutes, ist bei dem beweglichen Gut O kein separates Standortbestimmungssystem notwendig. Insbesondere im Hinblick darauf, dass oftmals eine große Anzahl von beweglichen Objekten O bezüglich ihre Standortes zu überwachen ist, ermöglicht diese Ausgestaltungsform des erfindungsgemäßen Verfahrens gegenüber dem eingangs zitierten Stand der Technik ein außerordentlich kostengünstig zu realisierendes Verfahren. Es ist darauf hinzuweisen, dass auch die Übertragung nur eines Datums der o.g. netzintern ermittelten Standortdaten (also die Übertragung des Identifikationszeichens CELL-ID oder des Kennzeichens LOC-AR oder der Kennung VLR-NO) ausreichend ist, es brauchen keineswegs stets alle drei Arten von Standortdaten übermittelt werden.

Es soll ausdrücklich erwähnt werden, dass die netzintern ermittelten Standortdaten, nämlich die Kennung VLR-NO des Besucherregisters VLR, das Kennzeichen LOC-AR des geografischen Gebietes und das Identifikationszeichen CELL-ID der Mobilfunkzelle, auch bei den im Zusammenhang mit den Figuren 1 bis 3 beschriebenen Verfahren als Standortdaten gebildet und an den Dienstesteuerungspunkt SCP übertragen werden können. Analog zu den beiden Ausgestaltungsbeispielen der Verfahren, wie sie in den Figuren 1 und 2 dargestellt sind, können auch diese netzintern bestimmten Standortdaten mittels der Nachricht IDP vom Dienstevermittlungspunkt SSP zum Dienstesteuerungspunkt SCP übertragen werden.

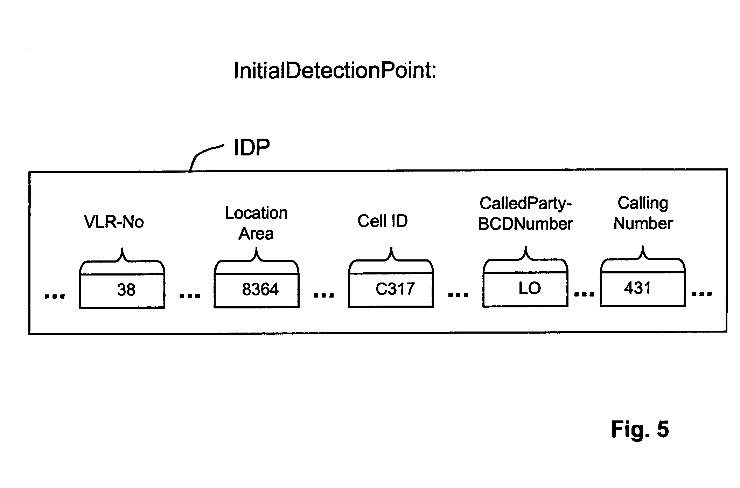

In Figur 5 ist eine derartige Nachricht IDP (Initial Detection Point) dargestellt, die für den Transport der Standortdaten vom Dienstevermittlungspunkt SSP zum Dienstesteuerungspunkt SCP verwendet wird. In dieser Nachricht IDP sind u. a. die fünf in Figur 5 dargestellten Datenfelder vorhanden. In einem ersten Datenfeld "VLR-No" wird die Kennung (in diesem Beispiel "38") des für das mobile Kommunikationsendgerät KEG aktuell zuständigen Besucherregisters VLR, in einem zweiten Datenfeld "Location-Area" das Kennzeichen ("8364") des Gebietes (Location Area), in dem sich das mobile Kommunikationsendgerät aktuell befindet, in einem dritten Datenfeld "Cell-ID" das Identifikationszeichen ("C317") der aktuell benutzten Mobilfunkzelle, in einem vierten Datenfeld "CalledPartyBCDNumber" die Standortdaten LO und in einem fünften Datenfeld "Calling Number" als Absenderadresse die Mobilfunkrufnummer ("431") des Kommunikationsendgerätes KEG übertragen. Das vierte Datenfeld "CalledPartyBCDNumber" wird nicht mit der Rufnummer des gerufenen Teilnehmers belegt, sondern in dieses Datenfeld werden die (z. B. von dem Satellitenempfänger GPS ermittelten) Standortdaten LO eingetragen.

Es wurden Verfahren beschrieben, mit denen den Standort eines mobilen Objektes O beschreibende Daten (Standortdaten) zu einem Empfangsrechner R zum Zwecke der Datenauswertung und Standortbestimmung übertragen werden. Eine derartige Standortbestimmung ist beispielsweise für Logistik-Unternehmen von Bedeutung, welche einen Fuhrpark aus z. B. LKWs oder Zugwagons besitzen. Diese Logistik-Unternehmen benötigen die Position ihrer Fahrzeuge z. B. für ihre Kunden, die anhand dieser Daten einen Fortschritt bei der Lieferung der beweglichen Güter beobachten können. Oftmals stellen die Fahrzeuge des Fuhrparks selbst auch einen hohen Wert dar, so dass die Standortinformationen z. B. bei Unfällen oder Diebstahl (der Fahrzeuge oder der beweglichen Güter/Objekte) von großem Nutzen sind. Mit Hilfe der Standortinformationen können auch Informationen über ungenutzte oder ruhende Fahrzeuge ermittelt und damit eine effiziente Fuhrparksplanung erreicht werden.

## Patentansprüche

1. Verfahren zum Übertragen von ein bewegliches Objekt (O) betreffenden Standortdaten (LO)bei dem mit dem Objekt ein mobiles Kommunikationsendgerät verbunden ist, jedoch bei dem Objekt keine Standortbestimmungseinrichtung vorhanden ist, wobei bei dem Verfahren
- von dem mit dem Objekt (O) verbundenen mobilen Kommunikationsendgerät (KEG) ein standortdatenfreier USSD-String (USSD) zu einem Mobilkommunikationsnetz (MKN) übertragen wird,
- daraufhin in dem Mobilkommunikationsnetz (MKN) mittels einer Basisstation netzintern Standortdaten (VLR-No, Loc-Ar, Cell-ID) des mobilen Kommunikationsendgerätes (KEG) ermittelt werden,
- diese Standortdaten zu einem Steuerknoten (SCP) übertragen werden, und
- von dem Steuerknoten (SCP) des Mobilkommunikationsnetzes die Standortdaten (LO) an einen Empfangsrechner (R) übertragen werden, in welchem eine Datenauswertung durchführbar ist.

2. Verfahren nach Anspruch 1,
**dadurch gekennzeichnet, dass**
- als netzintern ermittelte Standortdaten eine Kennung (VLR-No) eines für das mobile Kommunikationsendgerät zuständigen Besucherregisters (VLR) übertragen wird.

3. Verfahren nach Anspruch 1 oder 2,
**dadurch gekennzeichnet, dass**
- als netzintern ermittelte Standortdaten ein Kennzeichen (Loc-Ar) des Gebietes übertragen wird, in dem sich das mobile Kommunikationsendgerät (KEG) befindet.

4. Verfahren nach einem der Ansprüche 1 bis 3,
**dadurch gekennzeichnet, dass**
- als netzintern ermittelte Standortdaten ein Identifikationszeichen (Cell-ID) der Mobilfunkzelle übertragen wird, in der sich das mobile Kommunikationsendgerät (KEG) befindet.

5. Verfahren nach einem der vorhergehenden Ansprüche,
**dadurch gekennzeichnet, dass**
als Steuerknoten ein Dienstesteuerungspunkt (SCP) eines eine Struktur eines Intelligenten Netzes (IN) aufweisenden Mobilkommunikationsnetzes verwendet wird.

6. Verfahren nach Anspruch 5,
**dadurch gekennzeichnet, dass**
der Empfangsrechner (R) als Teil des Dienstesteuerungspunktes (SCP) ausgebildet ist.

7. Verfahren nach einem der vorhergehenden Ansprüche,
**dadurch gekennzeichnet, dass**
die Standortdaten (LO) zu vorausbestimmten Zeitpunkten (T) zu dem Empfangsrechner übertragen werden.

8. Verfahren nach einem der vorhergehenden Ansprüche,
**dadurch gekennzeichnet, dass**
ein bewegliches Objekt (O) verwendet wird, das einem Transportfahrzeug (F) zugeordnet ist.

## Claims

1. Method for transmitting position data (LO) relating to a moving object (O), in which a mobile communication terminal is connected to the object, but no position finding device is present in the object, where the method involves
- the mobile communication terminal (KEG) connected to the object (O) transmitting a position-data-free USSD string (USSD) to a mobile communication network (MKN),
- position data (VLR-No, Loc-Ar, Cell-ID) for the mobile communication terminal (KEG) then being ascertained internally in the mobile communication network (MKN) by means of a base station,
- these position data being transmitted to a control node (SCP), and
- the control node (SCP) in the mobile communication network transmitting the position data (LO) to a reception computer (R) which can perform data evaluation.

2. Method according to Claim 1,
**characterized in that**
- the position data ascertained internally in the network which are transmitted are an identifier (VLR-No) for a visitor location register (VLR) which is responsible for the mobile communication terminal.

3. Method according to Claim 1 or 2,
**characterized in that**
- the position data ascertained internally in the network which are transmitted are an index (Loc-Ar) for the area in which the mobile communication terminal (KEG) is situated.

4. Method according to one of Claims 1 to 3,
**characterized in that**
- the position data ascertained internally in the network which are transmitted are an identification sign (Cell-ID) for the mobile radio cell in which the mobile communication terminal (KEG) is situated.

5. Method according to one of the preceding claims,
**characterized in that**
the control node used is a service control point (SCP) in a mobile communication network having the structure of an intelligent network (IN).

6. Method according to Claim 5,
**characterized in that**
the reception computer (R) is in the form of part of the service control point (SCP).

7. Method according to one of the preceding claims,
**characterized in that**
the position data (LO) are transmitted to the reception computer at predetermined times (T).

8. Method according to one of the preceding claims,
**characterized in that**
a moving object (O) is used which is associated with a transport vehicle (F).

## Revendications

1. Procédé de transmission de données de localisation (LO) concernant un objet mobile (O), dans lequel un terminal de communication mobile est relié à l'objet mais aucun dispositif de localisation ne se trouve sur l'objet, procédé dans lequel
- une chaîne USSD (USSD) exempte de données de localisation est transmise par le terminal de communication mobile (KEG) relié à l'objet (O) à un réseau de communication mobile (MKN),
- puis, dans le réseau de communication mobile (MKN), des données de localisation (VRL-No, Loc-Ar, Cell-ID) du terminal de communication mobile (KEG) sont déterminées de manière interne au réseau au moyen d'une station de base,
- ces données de localisation sont transmises à un noeud de commande (SCP), et
- les données de localisation (LO) sont transmises du noeud de commande (SCP) du réseau de communication mobile à un ordinateur de réception (R) dans lequel une évaluation de données peut être effectuée.

2. Procédé selon la revendication 1,
**caractérisé par le fait que**
- comme données de localisation déterminées de manière interne au réseau, on transmet un identificateur (VLR-No) d'un enregistreur de localisation visité (VLR) compétent pour le terminal de communication.

3. Procédé selon la revendication 1 ou 2,
**caractérisé par le fait que**
- comme données de localisation déterminées de manière interne au réseau, on transmet un identificateur (Loc-Ar) de la zone dans laquelle se trouve le terminal de communication mobile (KEG).

4. Procédé selon l'une des revendications 1 à 3,
**caractérisé par le fait que**
- comme données de localisation déterminées de manière interne au réseau, on transmet un symbole d'identification (Cell-ID) de la cellule de radiocommunication mobile dans laquelle se trouve le terminal de communication mobile (KEG).

5. Procédé selon l'une des revendications précédentes,
**caractérisé par le fait que**, comme noeud de commande, on utilise un point de commande de service (SCP) d'un réseau de communication mobile ayant une structure d'un réseau intelligent (IN).

6. Procédé selon la revendication 5,
**caractérisé par le fait que** l'ordinateur de réception (R) est conçu comme faisant partie du point de commande de service (SCP).

7. Procédé selon l'une des revendications précédentes,
**caractérisé par le fait que** les données de localisation (LO) sont transmises à l'ordinateur de réception à des instants prédéterminés (T).

8. Procédé selon l'une des revendications précédentes,
**caractérisé par le fait que** l'on utilise un objet mobile (O) qui est associé à un véhicule de transport (F).
